# EUROPEAN PATENT SPECIFICATION

(11) **EP 2 999 041 B1**
(45) Date of publication and mention of the grant of the patent: **13.03.2019**
(21) Application number: 14858438.6
(22) Date of filing: 31.10.2014
(51) Int. Cl.: H01M 10/04, H01M 10/0587, H01M 2/02, H01M 4/02, H01M 4/13, H01M 4/131, H01M 2/16, H01M 10/0525, H01M 10/42

(54) **SECONDARY BATTERY HAVING JELLY ROLL-TYPE ELECTRODE ASSEMBLY HAVING INTERMITTENT BLANK PORTION FORMED ON POSITIVE ELECTRODE COLLECTOR**
SEKUNDÄRBATTERIE MIT ELEKTRODENWICKLUNG MIT INTERMITTIERENDEM BLINDTEIL AUF EINEM POSITIVELEKTRODENKOLLEKTOR
BATTERIE SECONDAIRE COMPORTANT UN ENSEMBLE D'ÉLECTRODES DE TYPE ROULEAU À LA GELÉE POSSÉDANT DES PARTIES VIDES INTERMITTENTES FORMÉES SUR LE COLLECTEUR D'ÉLECTRODE POSITIVE

(30) Priority: 31.10.2013 KR 20130131180; 28.10.2014 KR 20140147663
(43) Date of publication of application: 23.03.2016
(73) Proprietor: LG Chem, Ltd., Seoul 07336 (KR)
(72) Inventor: KIM, Seok-Je, Daejeon 305-380 (KR); LEE, Yong-Tae, Daejeon 305-380 (KR); KIM, In-Jung, Daejeon 305-380 (KR); JO, A-Ra, Daejeon 305-380 (KR)
(74) Representative: Cabinet Plasseraud
(86) International application number: PCT/KR2014/010389
(87) International publication number: WO 2015/065119

(56) References cited:
- JP-A- H07 153 490
- JP-A- 2007 026 786
- JP-A- 2011 014 238
- KR-A- 20050 113 860
- KR-A- 20120 060 537
- KR-A- 20130 073 838
- US-A1- 2002 192 558

## Description

### TECHNICAL FIELD

The present disclosure relates to a secondary battery, and more particularly, to a secondary battery comprising a jellyroll type electrode assembly having a non-coating region formed at a portion of a positive electrode current collector.

The present application claims priority to Korean Patent Application No. 10-2013-0131180 filed in the Republic of Korea on October 31, 2013, and Korean Patent Application No. 10-2014-0147663 filed in the Republic of Korea on October 28, 2014.

### BACKGROUND ART

With the technology development and the increasing demand for mobile devices, electric vehicles, hybrid vehicles, energy storage systems, and uninterruptible power supplies, the demand for batteries as an energy source is dramatically increasing, and in keeping up with this movement, many studies are being made on batteries to meet the diversity of needs.

An electrode assembly included in a secondary battery is classified according to the type in which a positive electrode plate, a separator, and a negative electrode plate are assembled, and one of them is a jellyroll type electrode assembly. A jellyroll type electrode assembly is specifically disclosed in US 2002/0192558, in JP H07 153490, and in the Applicant's Korean Patent Publication Nos. 10-2008-0047165, 10-2009-0129621, 10-2010-0071941, 10-2010-0109842, and 10-2013-0052410.

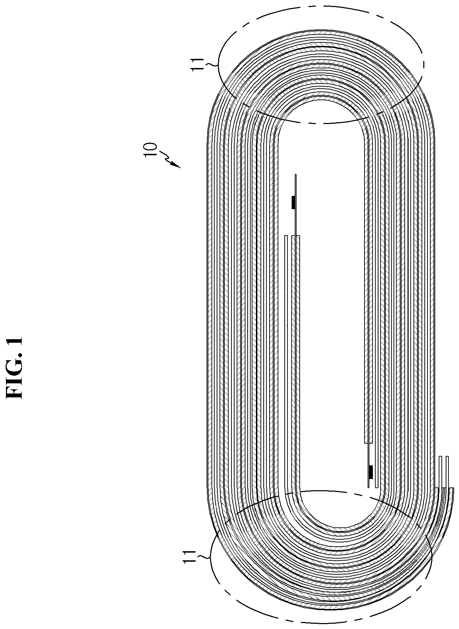

FIG. 1 is a cross-sectional view showing configuration of a general jellyroll type electrode assembly 10.

Referring to FIG. 1, the jellyroll type electrode assembly 10 is manufactured by winding a positive electrode and a negative electrode with a separator interposed between, the positive electrode including a positive electrode active material coating region on one surface or both surfaces of a positive electrode current collector and the negative electrode including a negative electrode active material coating region on one surface or both surfaces of a negative electrode current collector. The jellyroll type electrode assembly 10 expands its volume with the movement of lithium ions while a battery is being charged, and restores its original condition while the battery is being discharged. That is, the battery expands and contracts repeatedly within a few percent (%) of the total volume during charge and discharge.

The volume change of the jellyroll type electrode assembly 10 caused by expansion and contraction transfers tension to inside and outside of the jellyroll type electrode assembly 10. Particularly, tension occurring at a curved surface 11 of the jellyroll type electrode assembly shows a different aspect from those of other parts, and as a consequence, warping of the electrode assembly 10 takes place, resulting in a shorter life of the secondary battery.

### DISCLOSURE

### Technical Problem

The present disclosure is designed to solve the above problem, and therefore, the present disclosure is directed to providing a secondary battery comprising a jellyroll type electrode assembly with a structure for preventing the separation or elimination of a positive electrode active material from occurring at a curved surface.

### Technical Solution

To achieve the above object, a secondary battery according to the present disclosure includes a jellyroll type electrode assembly in which a positive electrode including a positive electrode active material coating region on at least one surface of a positive electrode current collector and a negative electrode including a negative electrode active material coating region on at least one surface of a negative electrode current collector are wound in the jellyroll type such that the positive electrode and the negative electrode face each other with a separator interposed between, and a positive electrode tab and a negative electrode tab electrically connected to the positive electrode current collector and the negative electrode current collector, respectively, and standing out from the electrode assembly, wherein the positive electrode current collector has an intermittent non-coating region where the positive electrode active material coating region is absent at a part of a region corresponding to a curved surface of the jellyroll type electrode assembly when the jellyroll type electrode assembly is wound, wherein the jelly type electrode assembly has a thickness (T) from the inside of the jellyroll type electrode assembly when the jellyroll type electrode assembly is wound.

According to the invention, the intermittent non-coating region is only disposed within a thickness range corresponding to 30% of the thickness of the electrode assembly from the inside of the electrode assembly.

According to an embodiment of the present disclosure, the intermittent non-coating region may have a larger area of a non-coating region corresponding to a curved surface distant from a center than that of a curved surface close to the center when the electrode assembly is wound. Preferably, the intermittent non-coating region may be formed in the shape of fans having a same center angle at each of curved surface center points of the wound electrode assembly.

### Advantageous Effects

According to an aspect of the present disclosure, non-coating of a positive electrode active material on the curved surface of the jellyroll type electrode assembly may prevent the separation or elimination of a positive electrode active material.

According to another aspect of the present disclosure, an extra space is prepared for the volume expansion of a negative electrode active material during charge, thereby inhibiting warpage of the electrode assembly.

According to still another aspect of the present disclosure, a path through which gas produced during charging and discharging of the battery may move is built, thereby reducing the internal pressure of the electrode assembly.

According to further another aspect of the present disclosure, when a short circuit accident happens, for example, due to penetration of the secondary battery, heat generation caused by a short circuit current may be distributed.

### BRIEF DESCRIPTION OF THE DRAWINGS

The accompanying drawings illustrate a preferred embodiment of the present disclosure, and together with the foregoing disclosure, serve to provide further understanding of the technical aspect of the present disclosure, and thus, the present disclosure is not construed as being limited to the drawing.
FIG. 1 is a cross-sectional view showing configuration of a general jellyroll type electrode assembly.
FIG. 2 is a schematic diagram showing a structure of an electrode assembly provided in a secondary battery according to a preferred embodiment of the present disclosure.
FIG. 3 is a cross-sectional view showing configuration of an electrode assembly provided in a secondary battery according to a preferred embodiment of the present disclosure.

### MODE FOR CARRYING OUT THE INVENTION

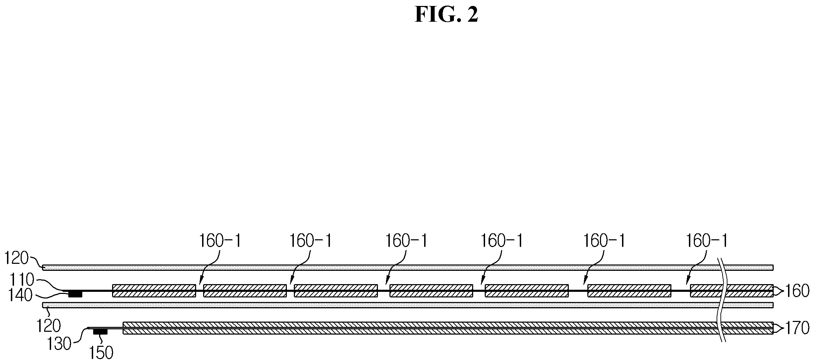

FIG. 2 is a schematic diagram showing a structure of an electrode assembly 100 provided in a secondary battery according to a preferred embodiment of the present disclosure.

Referring to FIG. 2, the electrode assembly 100 consists of unit cell, including a positive electrode current collector 110, a separator 120, and a negative electrode current collector 130.

The positive electrode current collector 110 is primarily made from aluminum. Alternatively, the positive electrode current collector 110 may be made from stainless steel, nickel, titanium, baked carbon, or aluminum or stainless steel treated with carbon, nickel, titanium, or silver on the surface. Further, the positive electrode current collector 110 is not limited to a particular material if it has a high conductivity while not causing a chemical change in the secondary battery.

A positive electrode tab 140 is provided at a certain area of the positive electrode current collector 110, and extends from the positive electrode current collector 110. The positive electrode tab 140 stands out from the electrode assembly. Alternatively, the positive electrode tab 140 may be formed by joining a member of a conductive material to a predetermined portion of the positive electrode current collector 110, for example, through welding. Also, the positive electrode tab 140 may be formed by a process which coats a positive electrode material on a certain area of the positive electrode current collector 110 followed by drying.

The negative electrode current collector 130 corresponding to the positive electrode current collector 110 is primarily made from copper. Alternatively, the negative electrode current collector 130 may be made from stainless steel, aluminum, nickel, titanium, baked carbon, or copper or stainless steel treated with carbon, nickel, titanium, or silver on the surface, and aluminum-cadmium alloys may be also used.

A negative electrode tab 150 is also provided at a certain area of the negative electrode current collector 130, and in the same way as the positive electrode tab 140 described above, the negative electrode tab 150 extends from the negative electrode current collector 130, and the negative electrode tab 150 may be formed by joining a member of a conductive material to a predetermined portion of the negative electrode current collector 130, for example, through welding, and may be formed by a process which coats a negative electrode material on a certain area of a peripheral surface of the negative electrode current collector followed by drying. The negative electrode tab 150 stands out from the electrode assembly.

The positive electrode tab 140 provided to the positive electrode current collector 110 is electrically connected to a positive electrode lead (not shown), and the negative electrode tab 150 provided to the negative electrode current collector 130 is electrically connected to a negative electrode lead (not shown). The positive electrode lead and the negative electrode lead may be respectively joined with a plurality of positive electrode tabs 140 and a plurality of negative electrode tabs 150.

The positive electrode current collector 110 is coated with a positive electrode active material 160 on one surface or both surfaces (hereinafter 'a positive electrode active material coating region'). Also, the negative electrode current collector 130 is coated with a negative electrode active material 170 on one surface or both surfaces (hereinafter 'a negative electrode active material coating region'). For example, the positive electrode active material is a lithium-based active material, and as a typical example, may include metal oxide such as LiCoO₂, LiNiO₂, LiMnO₂, LiMn₂O₄, LiFePO₄ or Li_{1+z}Ni_{1-x-y}CoₓM_{y}O₂(0≤x≤1, 0≤y≤1, 0≤x+y≤1, 0≤Z≤1, M denotes a metal such as Al, Sr, Mg, La, and Mn). The negative electrode active material is a carbon-based active material, and may include carbon materials such as crystalline carbon, amorphous carbon, carbon complex, and carbon fibers, lithium metals, and lithium alloys. The type and chemical composition of the positive electrode active material and the negative electrode active material may change based on the type of the secondary battery, and it should be understood that the above particular example is for illustration purposes only.

The separator 120 is not limited to a particular type, provided it is made from a porous material. The separator 120 may be formed of a porous polymer membrane, for example, a porous polyolefin membrane, polyvinylidene fluoride-co-hexafluoropropylene, polyvinylidene fluoride-trichloroethylene, polymethylmetacrylate, polyacrylonitrile, polyvinylpyrrolidone, polyvinylacetate, ethylene vinyl acetate copolymer, polyethyleneoxide, cellulose acetate, cellulose acetate butylate, cellulose acetate propionate, cyanoethylpullulan, cyanoethylpolyvinylalcohol, cyanoethylcellulose, cyanoethylsucrose, pullulan, carboxyl methyl cellulose, acrylonitrile butadiene styrene copolymer, polyimide, polyethylene terephthalate, polybutylene terephthalate, polyester, polyacetal, polyamide, polyetheretherketone, polyethersulfone, polyphenylene oxide, polyphenylene sulfidro, polyethylene naphthalene, a non-woven membrane, a membrane with a porous web structure, or combinations thereof. Inorganic particles may be bound to one surface or both surfaces of the separator 120.

The inorganic particles are preferably inorganic particles having a high dielectric constant greater than or equal to 5, and more preferably, inorganic particles having a high dielectric constant greater than or equal to 10 and a low density. This facilitates the transfer of lithium ions moving in the battery. Non-limiting examples of inorganic particles having a high dielectric constant greater than or equal to 5 include Pb(Zr,Ti)O₃ (PZT), Pb₁₋ₓLaₓZr_{1-y}Ti_{y}O₃ (PLZT), PB(Mg₃Nb_{2/3})O₃-PbTiO₃(PMN-PT), BaTiO₃, hafnia (HfO₂), SrTiO₃, TiO₂, Al₂O₃, ZrO₂, SnO₂, CeO₂, MgO, CaO, ZnO, Y₂O₃, or mixtures thereof.

The electrode assembly 100 provided in the present disclosure is an electrode assembly in which the positive electrode current collector 110 and the negative electrode current collector 130 are wound in a jellyroll structure with the separator 120 interposed between. Particularly, the positive electrode current collector 110 of the electrode assembly 100 according to the present disclosure includes an intermittent non-coating region 160-1 where the positive electrode active material coating region 160 is absent at a part of a region corresponding to a curved surface when wound.

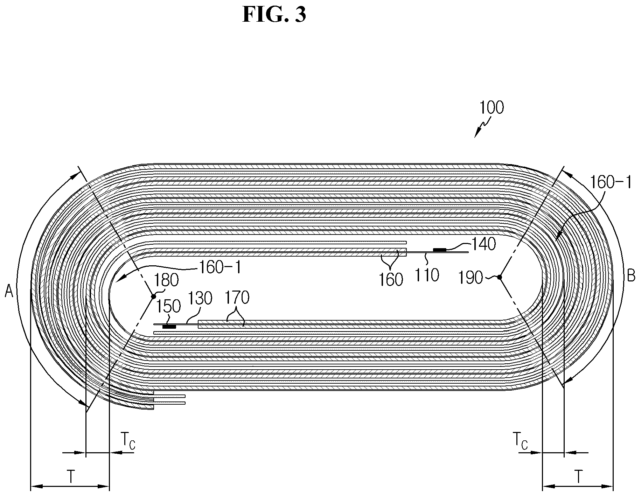

FIG. 3 is a cross-sectional view showing configuration of the electrode assembly 100 provided in a secondary battery according to a preferred embodiment of the present disclosure.

Referring to FIG. 3, it is found that the positive electrode active material coating region 160 is absent at a part of a region corresponding to a curved surface formed at both sides of the jellyroll type electrode assembly 100 when the jellyroll type electrode assembly 100 is wound. As is widely known, a traditional jellyroll type electrode assembly is susceptible to separation or elimination of a positive electrode active material coating region from a positive current collector on a curved surface by folding. Further, during charge, warpage may occur in a jellyroll type electrode assembly by volume expansion of a negative electrode active material coating region facing a positive electrode active material coating region along a curved surface. Accordingly, to solve the problem such as the above, the electrode assembly 100 according to the present disclosure has the intermittent non-coating region 160-1 where the positive electrode active material coating region 160 is absent at a region corresponding to the curved surface when the electrode assembly 100 is wound.

According to the invention, the intermittent non-coating region 160-1 is formed at a region corresponding to the curved surface within 30% thickness T_{C} of the thickness T of the jellyroll type electrode assembly 100 from the inside of the electrode assembly 100 when the jellyroll type electrode assembly 100 is wound. The closer to the center of the winding, the smaller radius of rotation, and thus, the larger curved extent, the greater tension occurring at the curved surface 11, so it is preferred to form the intermittent non-coating region 160-1 corresponding to the curved surface close to the center. In consideration of this point, it is the most effective that the intermittent non-coating region 160-1 is disposed within the thickness T_{C} range corresponding to 30% of the thickness T with respect to the inside of the electrode assembly 100. When the intermittent non-coating region 160-1 is out of the range, the energy density of the battery significantly reduces, making it difficult to ensure the battery capacity required.

The area of the intermittent non-coating region 160-1 corresponding to the curved surface distant from the center is larger than that of the curved surface close to the center when the electrode assembly 100 is wound. Preferably, as shown in the embodiment of FIG. 3, the intermittent non-coating region 160-1 may be formed in the shape of fans A and B having the same center angle at each of the curved surface center points 180 and 190 of the wound electrode assembly 100. It is obvious the size of the center angle may be variously set with varying widths of the intermittent non-coating region 160-1.

The secondary battery with the above configuration according to a preferred embodiment of the present disclosure may prevent the separation or elimination of a positive electrode active material occurring at the curved surface by the intermittent non-coating region 160-1 provided at the curved surface of the jellyroll type electrode assembly. Thus, an extra space is prepared for the volume expansion of a negative electrode active material during charge, thereby inhibiting warpage of the electrode assembly. Also, a path through which gas produced during charging and discharging of the battery may move is built, thereby reducing the internal pressure of the electrode assembly. Further, when a short circuit accident happens, for example, due to penetration of the secondary battery, heat generation caused by a short circuit current may be distributed.

### INDUSTRIAL APPLICABILITY

With the application of the present disclosure, it may prevent the separation or elimination of a positive electrode active material from occurring at the curved surface of the electrode assembly, thereby improving productivity of the secondary battery.

## Claims

1. A secondary battery comprising:
a jellyroll type electrode assembly (100) in which a positive electrode including a positive electrode active material coating region (160) on at least one surface of a positive electrode current collector (110) and a negative electrode including a negative electrode active material coating region on at least one surface of a negative electrode current collector (130) are wound in the jellyroll type such that the positive electrode and the negative electrode face each other with a separator (120) interposed between; and
a positive electrode tab (140) and a negative electrode tab (150) electrically connected to the positive electrode current collector (110) and the negative electrode current collector (130), respectively, and standing out from the electrode assembly (100),
wherein the positive electrode current collector (110) has an intermittent non-coating region (160-1) where the positive electrode active material coating region (160) is absent at a part of a region corresponding to a curved surface of the jellyroll type electrode assembly (100) when the jellyroll type electrode assembly (100) is wound,
the jellyroll type electrode assembly (100) has a thickness (T) from the inside of the jellyroll type electrode assembly (100) when the jellyroll type electrode assembly (100) is wound, and
the intermittent non-coating region (160-1) is only disposed within a thickness (T_{C}) range corresponding to 30% of the thickness (T) of the jellyroll type electrode assembly (100) with respect to the inside of the electrode assembly (100).

2. The secondary battery according to claim 1,
wherein the intermittent non-coating region (160-1) has a larger area of a non-coating region corresponding to a curved surface distant from a center than that of a curved surface close to the center when the electrode assembly (100) is wound.

3. The secondary battery according to claim 2, and
wherein the intermittent non-coating region (160-1) is formed in the shape of fans having a same center angle at each of curved surface center points (180, 190) of the wound electrode assembly (100).

## Patentansprüche

1. Sekundärbatterie, welche aufweist:
eine Jellyroll-artige Elektrodenanordnung (100), in der eine positive Elektrode, die einen Positive-Elektrode-Aktivmaterialbeschichtungsbereich (160) auf zumindest einem positiven Elektrodenstromsammler (110) enthält, und eine negative Elektrode, die einen Negative-Elektrode-Aktivmaterialbeschichtungsbereich auf zumindest einer Oberfläche eines negativen Elektrodenstromsammlers (130) enthält, Jellyroll-artig gewickelt sind, so dass die positive Elektrode und die negative Elektrode mit einem dazwischen eingefügten Separator (120) einander gegenüberliegen; und
eine Positive-Elektrode-Lasche (140) und eine Negative-Elektrode-Lasche (150), die jeweils mit dem positiven Elektrodenstromsammler (110) und dem negativen Elektrodenstromsammler (130) elektrisch verbunden sind und von der Elektrodenanordnung (100) vorstehen,
wobei der positive Elektrodenstromsammler (110) einen intermittierenden Nichtbeschichtungsbereich (160-1) aufweist, wo der Positive-Elektrode-Aktivmaterialbeschichtungsbereich (160) an einem Teil des Bereichs fehlt, der einer gekrümmten Oberfläche der Jellyroll-artigen Elektrodenanordnung (100) entspricht, wenn die Jellyroll-artige Elektrodenanordnung (100) gewickelt ist,
die Jellyroll-artige Elektrodenanordnung (100) eine Dicke (T) von der Innenseite der Jellyroll-artigen Elektrodenanordnung (100) aufweist, wenn die Jellyroll-artige Elektrodenanordnung (100) gewickelt ist, und
der intermittierende Nichtbeschichtungsbereich (160-1) nur innerhalb eines Dickenbereichs (T_{C}) entsprechend 30% der Dicke (T) der Jellyroll-artigen Elektrodenanordnung (100) in Bezug auf die Innenseite der Elektrodenanordnung (100) angeordnet ist.

2. Die Sekundärbatterie nach Anspruch 1,
wobei der intermittierende Nichtbeschichtungsbereich (160-1) eine größere Fläche eines einer von einer Mitte entfernten gekrümmten Oberfläche entsprechenden Nichtbeschichtungsbereich (160-1) aufweist als jene einer der Mitte benachbarten gekrümmten Oberfläche, wenn die Elektrodenanordnung (100) gewickelt ist.

3. Die Sekundärbatterie nach Anspruch 2,
wobei der intermittierende Nichtbeschichtungsbereich (160-1) in der Form von Fächern mit gleichem Mittenwinkel an jedem von gekrümmten Oberflächenmittelpunkten (180, 190) der gewickelten Elektrodenanordnung (100) gebildet ist.

## Revendications

1. Batterie secondaire comprenant :
un ensemble d'électrodes de type en forme de roulé (100) dans lequel une électrode positive incluant une région de revêtement de matériau actif d'électrode positive (160) sur au moins une surface d'un collecteur de courant d'électrode positive (110) et une électrode négative incluant une région de revêtement de matériau actif d'électrode négative sur au moins une surface d'un collecteur de courant d'électrode négative (130) sont enroulées selon le type en forme de roulé de telle sorte que l'électrode positive et l'électrode négative se font face avec un séparateur (120) interposé entre elles ; et
une patte d'électrode positive (140) et une patte d'électrode négative (150) connectées électriquement au collecteur de courant d'électrode positive (110) et au collecteur de courant d'électrode négative (130), respectivement, et faisant saillie de l'ensemble d'électrodes (100),
dans laquelle le collecteur de courant d'électrode positive (110) présente une région de non-revêtement intermittente (160-1), où la région de revêtement de matériau actif d'électrode positive (160) est absente au niveau d'une partie d'une région correspondant à une surface incurvée de l'ensemble d'électrodes de type en forme de roulé (100) lorsque l'ensemble d'électrodes de type en forme de roulé (100) est enroulé,
l'ensemble d'électrodes de type en forme de roulé (100) a une épaisseur (T) à partir de l'intérieur de l'ensemble d'électrodes de type en forme de roulé (100) lorsque l'ensemble d'électrodes de type en forme de roulé (100) est enroulé, et
la région de non-revêtement intermittente (160-1) est uniquement disposée à l'intérieur d'une plage d'épaisseur (T_{C}) correspondant à 30 % de l'épaisseur (T) de l'ensemble d'électrodes de type en forme de roulé (100) par rapport à l'intérieur de l'ensemble d'électrodes (100).

2. Batterie secondaire selon la revendication 1,
dans laquelle la région de non-revêtement intermittente (160-1) présente une surface plus grande d'une région de non-revêtement correspondant à une surface incurvée distante d'un centre que celle d'une surface incurvée proche du centre lorsque l'ensemble d'électrodes (100) est enroulé.

3. Batterie secondaire selon la revendication 2, et
dans laquelle la région de non-revêtement intermittente (160-1) a la forme d'éventails ayant un même angle central sur chacun des points centraux de surface incurvée (180, 190) de l'ensemble d'électrodes enroulé (100).
